# EUROPÄISCHE PATENTANMELDUNG

(11) **EP 0 705 652 A1**
(43) Veröffentlichungstag der Anmeldung: **10.04.1996**
(21) Anmeldenummer: 95810571.0
(22) Anmeldetag: 15.09.1995
(51) Int. Cl.: B23B 31/36

(54) **Einrichtung zum Ausrichten von Rundlaufabweichungen eines Werkzeughalters**

(30) Priorität: 22.09.1994 CH 2883/94
(71) Anmelder: POLYTOOL AG, CH-2544 Bettlach (CH)
(72) Erfinder: Vig, Istvan, CH-2544 Bettlach (CH)
(74) Vertreter: BOVARD AG - Patentanwälte

(57) **Zusammenfassung**

Mit einer Einrichtung zum Ausrichten von Rundlaufabweichungen eines zweiteiligen Werkzeughalters (1) kann über Einstellmittel (17) der zweite Teil (3) mit einer Werkzeugaufnahme bezüglich des ersten Teils (2), der in die Werkzeugmaschine einspannbar ist, verschoben werden. Die Einstellmittel (17) umfassen hierzu einen Halteteil (18), der auf den ersten Teil (2) des Werkzeughalters (1) aufsetzbar ist, und der mit Verstellmittel (23; 30) ausgestattet ist, über welche die Einstellung vorgenommen wird, nach welcher die Einstellmittel (17) wieder vom Werkzeughalter (1) abgenommen werden können.

## Beschreibung

Die vorliegende Erfindung bezieht sich auf eine Einrichtung zum Ausrichten von Rundlaufabweichungen eines im wesentlichen zweiteiligen Werkzeughalters gemäss dem Oberbegriff des Patentanspruches 1.

Derartige Einrichtungen sind bekannt. So zeigt beispielsweise die EP-A 0 235 327 eine Einrichtung zur Korrektur von Achsfehlern eines durch einen zweiteiligen Werkzeughalter gehaltenen Werkzeuges, die mittels einer Flanschverbindung durch Spannschrauben miteinander verbunden sind. Hierbei besteht die Stelleinrichtung aus einer Stellschraube, die in einem Stellring angeordnet ist, der an der kreiszylindrischen Umfangsfläche eines Halterteiles verdrehbar geführt ist, und die kreiszylindrische Umfangsfläche des anderen Halterteiles überragt. Zum Verstellen eines Halterteiles bezüglich des anderen kann nach dem Lösen der Spannmittel die Stellschraube verdreht werden, wodurch eine Verschiebung des Halterteiles bezüglich des anderen erfolgt.

Ein Nachteil dieser Einrichtung besteht darin, dass durch den Einstellring, der über die kreiszylindrischen Umfangsflächen der beiden Halterteile des Werkzeughalters gestülpt wird, der Durchmesser des Werkzeughalters vergrössert wird.

Die Aufgabe der vorliegenden Erfindung besteht nun darin, eine Einrichtung zum Ausrichten von Rundlaufabweichungen eines zweiteiligen Werkzeughalters zu schaffen, der den obengenannten Nachteil eliminiert, und mit welchem die Ausrichtung in einfacher Weise möglich ist.

Erfindungsgemäss erfolgt die Lösung dieser Aufgabe durch die in der Kennzeichnung des Anspruchs 1 angegebenen Merkmale.

Mit einer einzigen derartigen Einrichtung können mehrere in Werkzeugmaschinen enthaltene Werkzeughalter ausgerichtet werden. Des weiteren ist vorteilhaft, dass eine einzige Einrichtung zum Ausrichten von Werkzeughaltern dienen kann, die unterschiedliche Durchmesser aufweisen.

In vorteilhafter Weise ist der Halteteil der Einstellmittel mit einem Nocken und einem Abstützteil ausgestattet, mittels welchen der Halteteil in einfacher Weise auf einem Teil des Werkzeughalters eingesetzt und wieder entfernt werden kann.

Eine weitere vorteilhafte Ausgestaltung der Erfindung besteht darin, dass der Halteteil mit einem Vorsprung ausgestattet ist, der über die Peripheriebereiche der beiden Flansche sich erstreckt, wobei in diesem Vorsprung das Verstellelement derart angeordnet ist, dass es auf den Flansch desjenigen Teiles des Werkzeughalters wirkt, in welchem das Werkzeug gehalten ist, und der nicht der Halterung des Halteteils dient.

In vorteilhafter Weise besteht die Ausnehmung aus einer umlaufenden Nut, in welche der Nocken des Halteteils eingeschoben werden kann, so dass der Halteteil in jeder beliebigen Umfangs-Lage eingesetzt werden kann.

Eine weitere vorteilhafte Ausgestaltung der Erfindung besteht darin, dass der in die Nut einzusetzende Nocken an seinen beiden äusseren Randbereichen jeweils eine Abstützfläche aufweist, und dass der Abstützteil, der sich auf einem zylindrischen Bereich des Werkzeughalters abstützt, im seitlichen Randbereich jeweils mit einem Stützsteg ausgestattet ist, so dass der Halteteil bei Betätigung des Stellelementes gegen Abkippen gesichert ist.

Eine weitere vorteilhafte Ausgestaltung der Erfindung besteht darin, dass anstelle des Gewindebolzens das Verstellelement aus einem Exzenter besteht, der um eine im Vorsprung angebrachte Achse drehbar ist, die im wesentlichen quer zur Drehachse verläuft und der zum Verdrehen um die Achse mit einem Drehhebel ausgestattet ist. Mit dieser Ausgestaltung kann eine Verstellung eines Teiles des Werkzeughalters bezüglich dem anderen schnell durchgeführt werden. In vorteilhafter Weise ist dieser Exzenter mit einer Abflachung versehen, die im gelösten Zustand in den Wirkbereich zu liegen kommt, wodurch insbesondere zum Einsetzen und Wegnehmen der Einstellmittel ein Spalt geschaffen wird, der die entsprechende Manipulation erleichtert.

Eine Ausführungsform der Erfindung wird nachfolgend anhand der beiliegenden Zeichnung beispielhaft näher erläutert.

Es zeigt
Fig. 1 eine seitliche Ansicht der erfindungsgemässen Einrichtung, zum Teil geschnitten;
Fig. 2 eine Schnittdarstellung entlang Linie II-II durch die erfindungsgemässe Einrichtung gemäss Fig. 1;
Fig. 3 eine Seitenansicht auf das als Exzenter ausgebildete Verstellelement; und
Fig. 4 eine Ansicht von vorn auf das Verstellelement gemäss Fig. 3.

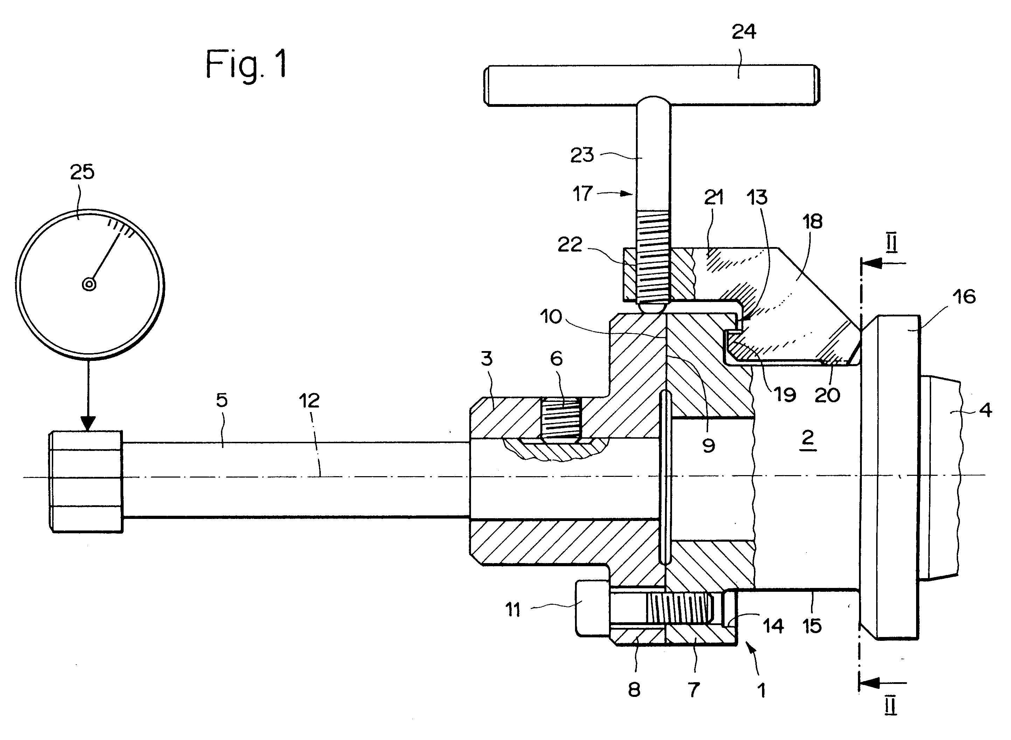

Wie aus Fig. 1 ersichtlich ist, besteht ein Werkzeughalter 1 aus einem ersten Teil 2 und einem zweiten Teil 3. Der erste Teil 2 ist hierbei in bekannter Weise beispielsweise über einen Konus 4 in eine nicht dargestellte Werkzeugmaschine einspannbar.

In den zweiten Teil 3 ist ein Werkzeug 5 einsetzbar und wird über die Halteschraube 6 gehalten.

Der erste Teil 2 und der zweite Teil 3 des Werkzeughalters 1 weisen an den einander zugewandten Seiten je einen Flansch 7 bzw. 8 auf. Diese beiden Flansche 7 und 8 sind je mit einer Fläche 9 bzw. 10 versehen, die im zusammengesetzten Zustand des Werkzeughalters 1 aufeinander zu liegen kommen und mittels Spannmittel in Form von Schrauben 11 gegeneinander gespannt sind. Diese beiden Flächen 9 und 10 sind senkrecht zur Drehachse 12 ausgerichtet, um welche der Werkzeughalter 1 im in die Werkzeugmaschine eingespannten Zustand mit dem Werkzeug 5 rotiert.

Auf der der Fläche 9 gegenüberliegenden Aussenseite 13 des Flansches 7 des ersten Teils 2 des Werkzeughalters 1 ist eine umlaufende Nut 14 eingelassen. An diese umlaufende Nut 14 angrenzend ist ein zylindrischer Bereich 15 angeordnet, der durch einen ringförmigen Steg 16 auf der Seite des Konus 4 abgeschlossen ist.

In den Bereich zwischen Flansch 7 des ersten Teils 2 und den ringförmigen Steg 16 sind die Einstellmittel 17 einsetzbar. Diese Einstellmittel 17 umfassen einen Halteteil 18, welcher mit einem Nocken 19 versehen ist, der im eingesetzten Zustand der Einstellmittel 17, wie in Fig. 1 dargestellt ist, in die Nut 14 zu liegen kommt. Der Halteteil 18 ist des weiteren mit einem Abstützteil 20 versehen, der sich auf dem zylinderförmigen Bereich 15 des ersten Teils 2 des Werkzeughalters 1 abstützt.

Der Halteteil 18 ist mit einem Vorsprung 21 versehen, der sich über die beiden Peripherieflächen der beiden Flansche 7 und 8 erstreckt. Der Vorsprung 21 weist eine durchgehende Bohrung 22 auf, die mit einem Gewinde versehen ist, in welche ein Gewindebolzen 23 eingeschraubt ist, der mit einem Drehgriff 24 ausgerüstet ist. Hierbei ist die Bohrung 22 im Vorsprung 21 so angeordnet, dass der Gewindebolzen 23 auf die Peripheriefläche des Flansches 8 des zweiten Teils 3 des Werkzeughalters 1 wirkt.

Zum Ausrichten des Werkzeuges 5 wird in die nicht dargestellte Werkzeugmaschine eine Messuhr 25 eingesetzt, deren Fühler im Kopfbereich des Werkzeuges 5 aufliegt. Der Werkzeughalter 1 wird über die Lagerung in der Werkzeugmaschine gedreht, bis die Messuhr 5 den grössten Ausschlag zeigt. In gleicher radialer Richtung wie die Messuhr werden dann die Einstellmittel 17 eingesetzt. Die Schrauben 11 werden leicht gelöst, wonach durch Verdrehen des Gewindebolzens 23 der zweite Teil 3 des Werkzeughalters 1 bezüglich des ersten Teiles 2 durch Gleiten der Flächen 9 und 10 aufeinander senkrecht zur Drehachse 12 verschoben werden kann. Der Rundlauf des Werkzeuges 5 kann danach nachgeprüft werden, wobei möglicherweise eine weitere Einstellung, die der oben beschriebenen entspricht, vorgenommen werden muss. Hierzu werden einfach die Einstellmittel wieder in der gewünschten Position eingesetzt bzw. verschoben. Wenn ein exakter Rundlauf erreicht ist, werden die Schrauben 11 angezogen, wodurch die beiden Flansche 8 gegeneinander gepresst werden. Die Einstellmittel 17 können dann aus dem Werkzeughalter 1 herausgenommen werden, wozu vorzugsweise der Gewindebolzen 23 zurückgeschraubt wird.

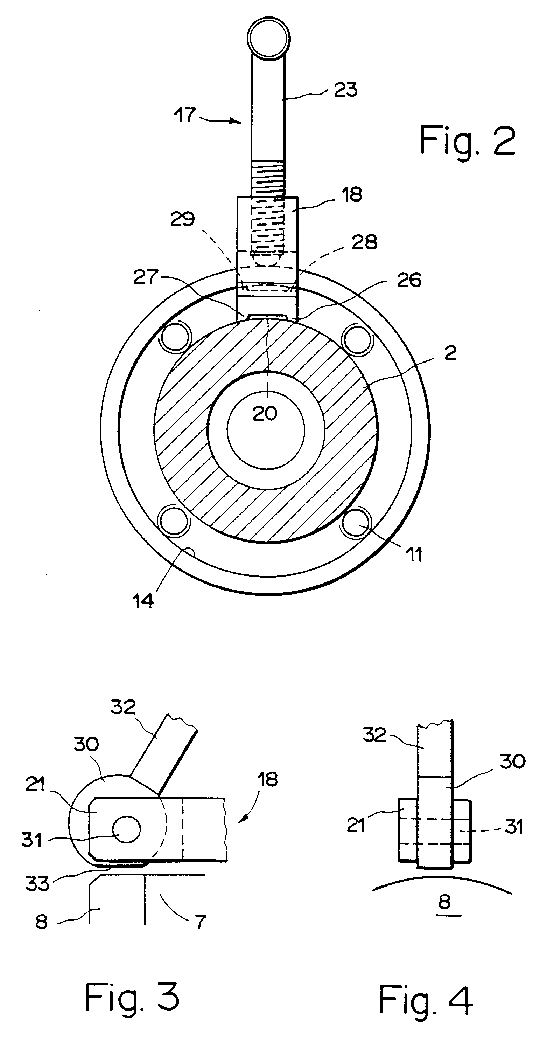

Wie aus Fig. 2 ersichtlich ist, welche die eingesetzten Einstellmittel 17 im Werkzeughalter 1 zeigen, ist der Abstützteil 20 mit einem jeweils im seitlichen Randbereich angeordneten Stützsteg 26 bzw. 27 ausgestattet. Da nur diese Stützstege 26 und 27 mit dem zylinderförmigen Bereich 15 in Kontakt kommen, ist der Halteteil 18 im eingesetzten Zustand in einer stabilen Lage, so dass beim Verstellen des zweiten Teiles 2 ein Abkippen der Einstellmittel 17 vermieden wird.

In gleicher Weise kann der Nocken 19 gestaltet sein, indem an beiden äusseren Randbereichen jeweils eine Abstützfläche 28 bzw. 29 angebracht ist. Diese Abstützflächen 28 und 29 kann auch in einfacher Weise lediglich durch eine Anschrägung der äusseren Randbereiche des Nockens 19 erreicht werden. Mit diesen Abstützflächen wird die obengenannte Stabilität erhöht.

Fig. 3 und Fig. 4 zeigen als mögliche Ausführungsform anstelle des Gewindebolzens 23 gemäss Fig. 1 und 2 zur Verstellung einen Exzenter 30. Dieser Exzenter 30 ist um eine Achse 31 drehbar, die in einer gabeligen Ausnehmung des Vorsprungs 21 des Halteteils 18 quer zur Drehachse 12 (Fig. 1) angebracht ist. Dabei ist die Anordnung so, dass beim Verdrehen des Exzenters 30 um die Achse 31 dieser auf den Flansch 8 des zweiten Teiles 3 wirkt, so dass dieser bezüglich des Flansches 7 des ersten Teiles 2 verschiebbar ist. Zum Verdrehen des Exzenters 30 ist dieser mit einem Drehhebel 32 ausgestattet. Das Ausrichten von Rundlaufabweichungen erfolgt in gleicher Weise, wie für die Ausführung gemäss Fig. 1 und 2 beschrieben wurde.

Um die mit dem Exzenter 30 ausgerüsteten Einstellmittel 17 in den Werkzeughalter 1 ohne Probleme einsetzen zu können, ist der Exzenter in einem Bereich seiner Umfangsfläche mit einer Abflachung 33 versehen. Zwischen dieser Abflachung 33 und dem Flansch 8 entsteht somit ein Zwischenraum, welcher das Einsetzen erleichtert.

Mit dieser erfindungsgemässen Einrichtung kann der Durchmesser des Werkzeughalters gering gehalten werden, wobei eine Einrichtung für mehrere Werkzeughalter verwendbar ist.

## Patentansprüche

1. Einrichtung zum Ausrichten von Rundlaufabweichungen eines im wesentlichen zweiteiligen Werkzeughalters, der um eine Drehachse einer Werkzeugmaschine rotiert, dessen erster Teil in die Werkzeugmaschine einspannbar ist, während der zweite Teil mit einer Werkzeugaufnahme versehen ist, und die beiden Teile an den einander zugewandten Seiten je einen Flansch mit einer senkrecht zur Drehachse ausgerichtete Fläche aufweisen, die über Spannmittel gegeneinander spannbar sind, und der erste Teil des Werkzeughalters bezüglich des zweiten Teils des Werkzeughalters zum Ausrichten entlang der Flächen über Einstellmittel verschiebbar ist, dadurch gekennzeichnet, dass die Einstellmittel (17) einen Halteteil (18) umfassen, welcher auf einen Teil (2) bzw. (3) des Werkzeughalters (1) aufsetzbar ist, welcher mit einem Verstellelement (23; 30) ausgestattet ist, mit welchem der andere Teil (3) bzw. (2) des Werkzeughalters (1) bei gelösten Spannmitteln (11) verschiebbar ist, und der nach dem Ausrichten vom Werkzeughalter (1) abnehmbar ist.

2. Einrichtung nach Anspruch 1, dadurch gekennzeichnet, dass der Halteteil (18) mit einem Nocken (19) ausgestattet ist, welcher in eine Ausnehmung (14) einführbar ist, die im einen Teil (2) bzw. (3) des Werkzeughalters (1) angebracht ist, und des weiteren mit einem Abstützteil (20) ausgerüstet ist, welcher auf demselben Teil (2) bzw. (3) des Werkzeughalters (1) abgestützt ist.

3. Einrichtung nach Anspruch 1 oder 2, dadurch gekennzeichnet, dass der Halteteil (18) mit einem Vorsprung (21) ausgestattet ist, welcher im auf den Werkzeughalter (1) aufgesetzten Zustand sich über die Peripheriebereiche der beiden Flansche (7, 8) erstreckt, und dass in diesem Vorsprung (21) das Verstellelement (23; 30) angeordnet ist.

4. Einrichtung nach Anspruch 2 oder 3, dadurch gekennzeichnet, dass die Ausnehmung aus einer umlaufenden Nut (14) besteht, die in den ersten Teil (2) des Werkzeughalters (1) in die der Fläche (9) des Flansches (7) gegenüberliegenden Aussenseite (13) eingelassen ist und dass das Verstellelement (23; 30) auf die an die Fläche (10) des Flansches (8) des zweiten Teiles (3) des Werkzeughalters (1) angrenzende Peripheriefläche wirksam ist.

5. Einrichtung nach Anspruch 4, dadurch gekennzeichnet, dass der in die Nut (14) einzusetzende Nocken (19) an seinen beiden äusseren Randbereichen jeweils eine Abstützfläche (28, 29) aufweist.

6. Einrichtung nach einem der Ansprüche 2 bis 5, dadurch gekennzeichnet, dass der Abstützteil (20) auf einem an den Flansch angrenzenden zylindrischen Bereich (15) des ersten Teils (2) des Werkzeughalters (1) abgestützt ist.

7. Einrichtung nach Anspruch 6, dadurch gekennzeichnet, dass der Abstützteil (20) des Halteteils (18) mit einem jeweils im seitlichen Randbereich angeordneten Stützsteg (26, 27) ausgestattet ist.

8. Einrichtung nach einem der Ansprüche 3 bis 7, dadurch gekennzeichnet, dass das Verstellelement aus einem Gewindebolzen (23) besteht, welcher in eine mit einem entsprechenden Gewinde versehene Bohrung (22) des Vorsprungs (21) des Halteteils (18) einschraubbar ist, welche im wesentlichen senkrecht zur Drehachse (12) angeordnet ist, und dass der Gewindebolzen (23) mit einem Drehgriff (24) ausgestattet ist.

9. Einrichtung nach einem der Ansprüche 3 bis 7, dadurch gekennzeichnet, dass das Verstellelement aus einem Exzenter (30) besteht, welcher um eine im Vorsprung (21) angebrachte Achse (31) drehbar ist, die im wesentlichen quer zur Drehachse (12) verläuft, und welcher zum Verdrehen um die Achse (31) mit einem Drehhebel (32) ausgestattet ist.

10. Einrichtung nach Anspruch 9, dadurch gekennzeichnet, dass der Exzenter (30) in einem Bereich seiner Umfangsfläche mit einer Abflachung (33) ausgestattet ist.
